# EUROPEAN PATENT APPLICATION

(11) **EP 0 622 292 A1**
(43) Date of publication of application: **02.11.1994**
(21) Application number: 94303016.3
(22) Date of filing: 26.04.1994
(51) Int. Cl.: B62D 53/08, B60R 25/00

(54) **Trailer security system**

(30) Priority: 28.04.1993 GB 9308769; 16.11.1993 GB 9323539
(71) Applicant: Hemmingsley, Norman John, Wolverhampton, West Midlands, WV3 0LF (GB)
(72) Inventor: Hemmingsley, Norman John, Wolverhampton, West Midlands, WV3 0LF (GB)
(74) Representative: Brown, Michael Stanley

(57) **Abstract**

An anti-theft device for a trailer having a king pin (10) includes a jaw (17) movable between open and closed positions. The jaw (17) is pivotally mounted between upper and lower steel plates (15 and 16) and, when in its closed position, the jaw (17) engages with the reduced diameter portion (12) of the king pin (10) and is held in its closed position by a catch (27) which interengages with a pawl (29). Movement of the pawl (29) into its release position is effected on movement of a detent (32) coupled to a key-operated locking mechanism (22).

## Description

### Field of the Invention

This invention relates to trailer security systems and is concerned with that type of trailer, normally referred to as a semi-trailer, which includes a king pin which is coupled to a skid plate on the tractor. The king pin includes a reduced diameter portion which cooperates with locating means on the skid plate, said reduced diameter portion defining, in effect, a groove or channel around the king pin.

During the transport of goods, there are times when a trailer is left unattended. Unattended trailers can be a target for thieves, particularly if the contents of the trailer are valuable.

A number of anti-theft devices have accordingly been proposed for fitment to trailer king pins and examples are shown in British Patent Specifications Nos. 1535774, 1572792, 2049587 and 2248810 and in US Patent Specifications Nos. 4067213 and 4691935.

In, for example, British Patent Specification No. 1572792, there is shown an anti-theft device which includes a main body which fits over the king pin and a key-operated mechanism for moving a locking member between a locking position, in which it enters the groove or channel around the king pin, and an unlocking position, in which it is clear of the groove or channel to allow the main body to be fitted on or removed from the king pin.

It is an object of the present invention to provide an improved form of anti-theft device and, in particular, to increase the level of security which is obtained by use of the device.

The majority of trailer king pins are carried on a mounting plate welded to the structure of the trailer. There is, however, an alternative design in which, to permit variation in the trailer turning circle, the king pin is carried on a plate bolted to the structure of the trailer. With such an arrangement, there is more than one fixing point on the trailer and the king pin mounting plate can be removed from one fixing point and then attached to the other fixing point by releasing the bolts.

It is a further object of the present invention to provide an anti-theft device which is suitable for use not only with standard king pin designs but also with this alternative king pin design.

### Summary of the Invention

According to the present invention there is provided an anti-theft device for fitment to a king pin of a trailer, which king pin has a reduced diameter portion with which the device cooperates, the device comprising a main body and a member which is movable relative to the main body between:-
a) a locking position in which, when the device is fitted to the king pin, the member enters the channel defined by the reduced diameter portion of the king pin so that the device is freely rotatable around the reduced diameter portion of the king pin but is not axially separable therefrom, and
b) an unlocking position in which the member is clear of the channel to permit the device to be fitted on or removed from the king pin,
   characterised in that said member is in the form of a jaw which is pivotally mounted on the main body and is arranged so that, when it is moved into its locking position, it engages with a catch and is held by the catch in its locking position until the catch is released upon operation of a release mechanism contained within the main body.

The main body of the device preferably comprises upper and lower plates between which the jaw is pivotally mounted. The catch is preferably spring-loaded towards a release position, from which it is moved by the jaw when the jaw is moved into its locking position. The arrangement is preferably such that, when the jaw is in its locking position, the catch is held against movement towards its release position by engagement with a pawl which, in turn, is only movable upon operation of the release mechanism contained within the main body, which release mechanism is preferably key-operated.

The arrangement will preferably be such that, when the main body of the device is fitted over the king pin and the jaw is moved into its locking position, no key operation is required. Thus, as the user of the device does not require a key to lock the jaw in its locking position, there will be no circumstances in which, although the device is fitted on the king pin, it is not locked in position. The jaw displaces the catch out of its release position and the catch is prevented by the pawl from moving back into its release position until the release mechanism is operated.

The pawl is preferably acted on by a detent movable under the control of the release mechanism. If the release mechanism is key-operated, it may be operable by means of a generally cylindrical key or may include a cylinder or equivalent which is arranged for free-wheeling movement (without transmission of movement to the detent) except upon insertion of the correct key. Thus, although a key is not required to fit the device in position, a key or equivalent will be required to remove the device from the king pin.

When the device is used with a king pin carried on a mounting plate bolted to the structure of the trailer, the upper plate of the main body of the device, i.e. that adjacent the king pin mounting plate, will have physical dimensions such that, when in position on the king pin, it physically prevents access being obtained by means of a spanner or the like to the heads of the bolts securing the king pin mounting plate to the structure of the trailer.

The holes for the bolts securing the mounting plate to the trailer structure are typically arranged in a circular array and the upper plate of the main body of the device accordingly preferably includes or carries a skirt extending upwardly to a position in which there is just clearance between the upper edge of the skirt and the heads of the bolts, the upper edge of the skirt having a diameter which is at least substantially equal to the pitch circle diameter of the bolt holes.

The anti-theft device will thus be free to rotate on the reduced diameter portion of the king pin, but the king pin and its mounting plate will not be removable from the structure of the trailer until the device is first removed from the king pin.

### Brief Description of the Drawings

Figure 1 is a vertical sectional view of an anti-theft device shown fitted to the king pin of a trailer,
Figure 2 is a plan view of the anti-theft device but omitting the upper plate of the device, the section of Figure 1 being taken along the line A-A of Figure 2, and

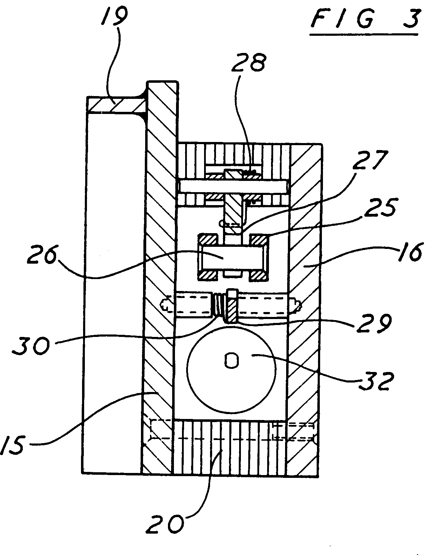

Figure 3 is a sectional view of the device along the line B-B of Figure 2.

### Description of the Preferred Embodiment

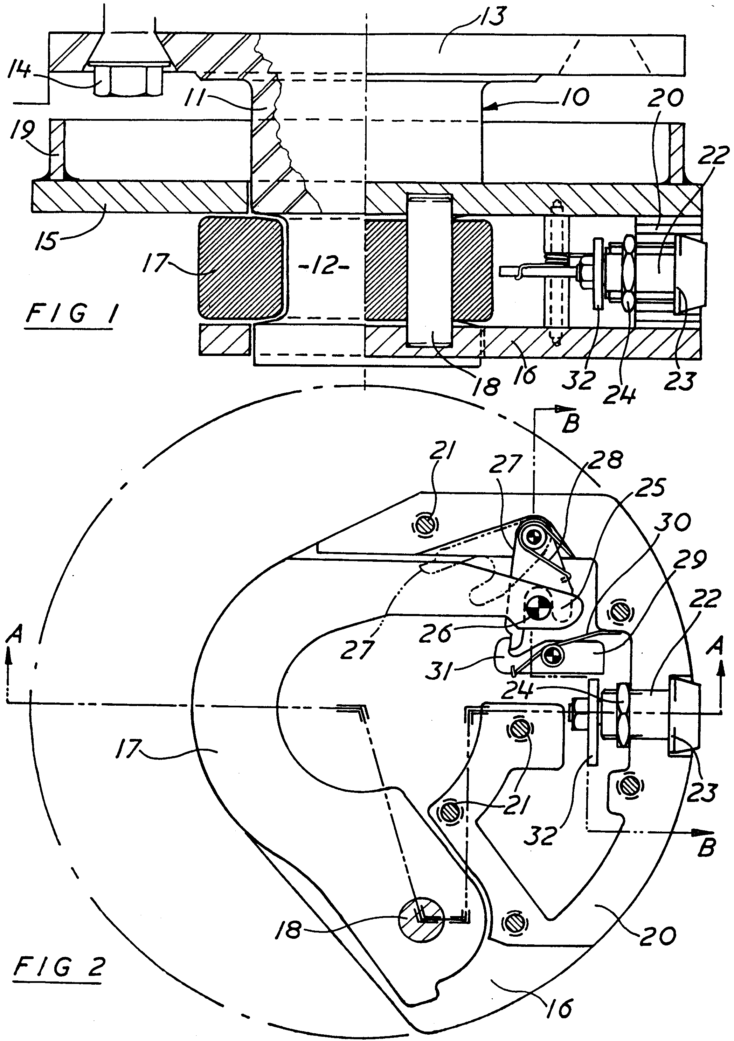

Tractor-trailer vehicles typically include a skid plate on the tractor which is arranged for coupling engagement with a king pin on the trailer. The king pin 10 shown in Figure 1 extends downwardly beneath a trailer (not shown) and includes a cylindrical stem 11 which, at a position spaced from its free end, includes a reduced diameter portion 12 which, in effect, provides a channel which engages with locating formations on the skid plate (not shown) of the tractor.

In the particular arrangement shown in Figure 1, the king pin 10 is carried by a flat plate 13 which is attached by a ring of eight bolts 14 to the structure of the trailer. The flat plate 13 is removable from the trailer structure by unfastening the bolts 14 and can be reconnected to the trailer structure at a different location when it is desired to change the turning circle of the trailer. As indicated, the flat mounting plate 13 is located in a recess in the trailer structure and the heads of the bolts 14 are located within this recess, i.e. they do not stand proud of the surrounding part of the trailer structure.

The anti-theft device shown in the drawings is designed to fit around the king pin 10 so as to be freely rotatable about the axis of the king pin 10, the arrangement being such that, when the anti-theft device is fitted in position around the king pin 10, it is not possible to engage the skid plate and the king pin 10 so that coupling of the trailer to a tractor is prevented.

The device includes upper and lower steel plates 15 and 16 between which a steel clamp jaw 17 is pivotally mounted so as to be movable between open and closed positions as explained below. Pivoting of the jaw 17 to the plates 15 and 16 is effected by means of a pin 18 which fits in blind bores in the two plates 15 and 16 (as shown in Figure 1) so that the position of the pivot pin 18 is not visible to a person looking at the device.

The upper and lower plates 15 and 16 are so shaped that, when the jaw 17 is in its open position, the device can be aligned with the axis of the king pin 10 and then moved upwardly over the king pin 10 into the position shown in Figure 1. Closing movement of the jaw 17 then serves to hold the device in position.

The upper plate 15 carries an upwardly extending skirt 19 of generally cylindrical form. The height of the skirt 19 is such that there is just clearance between the upper edge of the skirt 19 and the structure of the trailer, including the heads of the bolts 14 by means of which the king pin mounting plate 13 is attached to the trailer structure. Thus, when the device is fitted in position, it is not possible to engage the heads of the bolts 14 by means of spanners or the like and the king pin mounting plate 13 cannot be removed from the trailer structure.

The upper plate 15 is of circular form in plan view whereas the lower plate 16 is of less than circular form, as indicated in Figure 2. A central circular aperture is formed in the upper plate 15 to enable the plate to be fitted over the king pin 10 and a corresponding aligned aperture is formed in the lower plate 16.

The jaw 17 acts as a boundary wall for part of the space between the upper and lower plates 15 and 16 and the part of the space between the plates 15 and 16 not covered by the jaw 17 is enclosed by a stack of steel laminations 20 fixed in position by a set of steel dowels 21 extending between the two plates 15 and 16. The dowels 21 also serve to secure the two plates 15 and 16 together in spaced parallel array.

As shown in the drawings, the steel laminations 20 provide a location and mounting for a key-operated locking mechanism 22 the design of which is such that a collar 23 on a cylinder of the mechanism 22 seats in a recess afforded by the laminations 20 and a threaded sleeve 24 tightened on to the cylinder of the mechanism 22 abuts a shoulder afforded by the laminations 20. Positive fixing of the mechanism 22 is thus achieved. The upper and lower plates 15 and 16 and the laminations 20 together constitute a main body of the device and the locking mechanism 22 is contained within this main body.

The jaw 17 includes a nose portion 25 which enters within a mouth defined by the laminations 20 such that, as the jaw 17 moves into its fully closed position, a transverse pin 26 on the nose portion 25 engages a U-shaped catch 27 pivotally mounted between the upper and lower plates 15 and 16 and displaces the catch 27 from its release position (shown in broken lines in Figure 2) and moves the catch 27 into its locking position (shown in full lines in Figure 2). A spring 28 acts on the catch 27 to bias it towards its release position.

A pawl 29 is also pivotally mounted between the upper and lower plates 15 and 16. The pawl 29 is acted on by a spring 30 so as to be urged into the position shown in Figure 2 in which an end portion 31 of the pawl 29 hooks over the end of one of the arms of the U-shaped catch 27 to hold the catch 27 in the position shown in full lines in Figure 2. The catch 27 is thus held in engagement with the transverse pin 26 and movement of the jaw 17 out of its closed or locked position is thus prevented.

The locking mechanism 22 includes a detent 32 which rotates with the cylinder of the mechanism 22 when the correct key is inserted. The key (not shown) may include a generally cylindrical stem in which rebates are formed and the key-receiving slot of the mechanism 22 will be of corresponding configuration such that the insertion of an incorrect key or other device cannot be used to apply a large torque to the cylinder to effect unauthorised rotation of the detent 32. The detent 32 bears against the other end portion 33 of the pawl 29.

Thus, when a correct key is inserted in the mechanism 22 and is rotated, such movement is transmitted to the detent 32 which causes movement of the pawl 29 against the action of the spring 30. Such movement of the pawl 29 moves the end portion 31 of the pawl 29 into a position in which it is no longer hooked over the arm of the catch 27. The catch 27 is then free to move under the action of its spring 28 towards the position shown in broken lines in Figure 2 and the jaw 17 will be free to rotate in an anti-clockwise direction as viewed in Figure 2 towards its open position. The jaw 17 can thus be opened and the device as a whole removed from the king pin 10 to permit connection of a skid plate to the king pin 10.

If, as opposed to connecting a tractor to the trailer, it is desired to change the position of the king pin 10, access can now be obtained to the heads of the bolts 14. The mounting plate 13 can thus be removed and replaced in the required alternative position.

In an alternative arrangement, a rubber buffer (not shown) is mounted within the body of the device and is engaged by the nose portion 25 of the jaw 17 when the jaw 17 is in its fully closed position. The buffer will act to prevent rattling of the jaw 17 and will also provide an initial force urging the jaw 17 towards its open position when the locking action is released.

In another alternative arrangement, the locking mechanism 22 is such that, except when a correct key is inserted, the cylinder will merely free-wheel without the transmission of torque to the detent 32.

Although reference has been made above to the use of a key-operated locking mechanism, other security systems could be employed. For example, a multi-digit code may have to be entered on a keyboard or the like to perform an unlocking action.

An important advantage of the invention is that it provides an anti-theft device which can readily be fitted to the king pin of a trailer without the person fitting the device to the king pin requiring a key or the like. Thus, when the jaw 17 is moved into its closed or locking position around the king pin 10, it will be held in that position by the action of the catch 27 and the pawl 29 without any key or equivalent operation. The device is of such size that it can readily be carried in the cab of a tractor and, as no key is required, there is no excuse for the tractor driver not fitting the device to the king pin after he has disconnected the tractor from the trailer.

A further advantage of the invention is that, as the main body of the device, including the upper and lower plates 15 and 16 and the laminations 20, is formed from steel components, and as the jaw 17 is also of steel, a theft- and vandal-resistant design is provided.

## Claims

1. An anti-theft device for fitment to a king pin (10) of a trailer, which king pin (10) has a reduced diameter portion (12) with which the device cooperates, the device comprising a main body (15,16,20) and a member (17) which is movable relative to the main body (15,16,20) between:-
a) a locking position in which, when the device is fitted to the king pin (10), the member (17) enters the channel defined by the reduced diameter portion (12) of the king pin (10) so that the device is freely rotatable around the reduced diameter portion (12) but is not axially separable therefrom, and
b) an unlocking position in which the member (17) is clear of the channel to permit the device to be fitted on or removed from the king pin (10),
characterised in that said member (17) is in the form of a jaw which is pivotally mounted on the main body (15,16,20) and is arranged so that, when it is moved into its locking position, it engages with a catch (27) and is held by the catch (27) in its locking position until the catch (27) is released upon operation of a release mechanism (22,32) contained within the main body (15,16,20).

2. An anti-theft device according to Claim 1, characterised in that the main body comprises upper and lower plates (15 and 16) between which the jaw (17) is pivotally mounted.

3. An anti-theft device according to Claim 1, characterised in that the catch (27) is spring-loaded towards a release position, from which it is moved by the jaw (17) when the jaw (17) is moved into its locking position.

4. An anti-theft device according to Claim 3, characterised in that, when the jaw (17) is in its locking position, the catch (27) is held against movement towards its release position by engagement with a pawl (29) which, in turn, is only movable upon operation of the release mechanism (22,32).

5. An anti-theft device according to Claim 1, characterised in that the release mechanism (22,32) is key-operated and that, when the main body (15,16,20) is fitted over the king pin (10) and the jaw (17) is moved into its locking position, no key operation is required to secure the jaw (17) in its locking position.

6. An anti-theft device according to Claim 4, characterised in that the pawl (29) is acted upon by a detent (32) movable upon operation of the release mechanism (22,32).

7. An anti-theft device according to Claim 2, characterised in that the upper and lower plates (15 and 16) are steel plates, that there is a stack of steel laminations (20) between the upper and lower plates (15 and 16) and that the steel laminations (20) are shaped so as to provide physical location of the release mechanism (22,32).

8. An anti-theft device according to Claim 2 for use with a king pin (10) carried on a mounting plate (13) bolted to the structure of the trailer, characterised in that the upper plate (15) has physical dimensions such that, when in position on the king pin (10), it prevents access being obtained by means of a spanner or the like to the heads of the bolts (14) securing the mounting plate (13) to the structure of the trailer.

9. An anti-theft device according to Claim 8, characterised in that the upper plate (15) includes or carries a generally cylindrical skirt (19) extending upwardly to a position in which there is just clearance between the upper edge of the skirt (19) and the heads of the bolts (14).
